# EUROPEAN PATENT SPECIFICATION

(11) **EP 1 591 491 B1**
(45) Date of publication and mention of the grant of the patent: **13.08.2008**
(21) Application number: 05008014.2
(22) Date of filing: 13.04.2005
(51) Int. Cl.: C09D 4/00, C08J 7/04

(54) **A urethane acrylate composite structure**
Urethanacrylat Verbundstruktur
Urethane acrylate à structure composite

(30) Priority: 27.04.2004 US 832903
(43) Date of publication of application: 02.11.2005
(73) Proprietor: BASF CORPORATION, Florham Park, NJ 07932 (US)
(72) Inventor: Peeler, Calvin T., Canton, MI 48188 (US); Peters, David D., Wyandotte, MI 48192 (US)
(74) Representative: Karg, Jochen

(56) References cited:
- EP-A- 0 618 244
- DE-A- 4 404 616

## Description

### FIELD OF THE INVENTION

The present invention generally relates to a urethane acrylate composite structure.
The composite structure includes a first layer, which is a show surface of the composite structure, and a support layer. The support layer includes the urethane acrylate. The composite structure is primarily utilized to replace current fiberglass reinforced polyester (FRP) composites and polyurethane-based composites used in boats, automotive parts, and building supplies.

### BACKGROUND OF THE INVENTION

Use of composite structures throughout the boat, automotive parts, and building supplies industries is known in the art. As is also known in the art, prior art composite structures include a first layer and a support layer. The first layer, also referred to as a show or wear surface, is typically a styrenated polyester layer, and the support layer is typically either a fiberglass reinforced polyester (FRP) support layer or a reinforced polyurethane-based support layer. The support layer functions to provide structural integrity and durability to the complete composite article and can be made up of multiple layers of the composite material encapsulating various inserted material, such as fiberglass, wood, expanded metal sheets, cardboard honey comb and plate metal sheets and/or pieces. However, both the FRP support layer and the polyurethane-based support layer present deficiencies during the manufacturing process that result in increased cost of production, inconsistent quality, environmental, health, and safety issues, or combinations of these problems.

For example, when the FRP support layer is used, large quantities of styrene monomer, which is a volatile organic compound (VOC), are emitted. The emission of VOCs presents environmental, health, and safety issues, and is thus undesirable. As a result of the quantities of styrene monomer associated with the composite structures of the prior art, the Environmental Protection Agency (EPA) is placing restrictions on the composite industry to reduce or eliminate the emissions.

In response to the need outlined above, the industry has developed composite structures that have the polyurethane-based support layer that is the reaction product of an isocyanate component and a polyol component. However, the composite articles of the prior art that include the polyurethane-based support layer are also deficient for various reasons.

The polyurethane-based support layers are sensitive to moisture during production. The isocyanate component will react with moisture, causing the final composite article to be porous. As a result, inconsistent quality of the polyurethane-based support layer is an issue when the reaction occurs in the presence of moisture. Many of the common components in the polyurethane-based support layer, such as wood, cardboard, and other fibers, are particularly problematic since these materials generally contain moisture. This presents a problem for the building supplies industry, for which composite structures including wood fibers are particularly useful.

Urethane acrylates have been developed in the prior art for use in coating systems, but not for use in composite article applications. The urethane acrylates are the reaction product of an isocyanate component and a functionalized acrylate component that is reactive with isocyanate. The urethane acrylates are less sensitive to moisture, as compared to the composite structures including the polyurethane-based support layer. However, the urethane acrylates of the prior art are not suitable for use in composite structures because of resin stability limitations, resin viscosity and cost. To date, composite structures including polyurethane-based support layers have had limited application, due to an insufficient ability to cross-link between the first layer, i.e., the show surface, and the polyurethane-based support layer. Thus, adhesion between the layers is poor. The adhesion between the layers is important to prevent delamination of the layers and to inhibit defects in the first layer. Furthermore, the urethane acrylates of the prior art, more specifically a mixture of the isocyanate component and the acrylate component prior to reaction, are not optimized for spray application, which is one of the preferred methods of production for the composite structures. The viscosity of the mixture tends to be too high, making the urethane acrylates of the prior art suitable for pour application at best.

Due to the deficiencies of the prior art, including those described above, it is desirable to provide a novel composite structure having a first layer that is a show surface of the composite structure backed by a support layer formed from a urethane acrylate that is sufficiently viscous to enable spray application during the production of the composite structure and that sufficiently adheres to the first layer to prevent delamination of the layers.

### SUMMARY OF THE INVENTION AND ADVANTAGES

The subject invention provides a composite structure. The composite structure includes a first layer and a support layer. The first layer is a show surface of the composite structure. The support layer includes a urethane acrylate that is the reaction product of an isocyanate component and a stoichiometric excess of an acrylate component. More specifically, the isocyanate component has at least two isocyanate groups, and the acrylate component has at least one functional group that is reactive with at least one of the isocyanate groups.

The urethane acrylate has, as a neat unmodified resin, lower VOC emissions than typical styrenated polyester or vinyl ester resins. The urethane acrylate is not reactive with water, unlike the prior art composite structures including a polyurethane-based support layer, and is therefore not sensitive to moisture during spray applications. This results in more consistent physical properties of the composite structure. Further, the urethane acrylate reacts with the current materials used in the show surface of the composite structure, yielding a stronger cohesive bond without the use of adhesion promoters as is required in the prior art composite structures including the polyurethane-based support layer.

### DETAILED DESCRIPTION OF A PREFERRED EMBODIMENT

A composite structure according to the subject invention includes a first layer and a support layer. Ultimately, the first layer is a show surface of the composite structure. The support layer includes a urethane acrylate, which is the reaction product of an isocyanate component and an acrylate component, to be described in further detail below. The support layer provides structural integrity and durability to the complete composite structure. As such, the support layer is preferably at least 0.125 inches (3,18mm) thick, based on the physical requirements of the final composite structure. In one embodiment, the composite structure further includes a second layer. Preferably, the second layer is formed from a second urethane acrylate that may be the same as the urethane acrylate of the support layer. However, it is to be appreciated that the second layer may be formed from other polymers, such as polyurethanes. The second layer is disposed between the show surface and the support layer and has a smooth texture for improving the appearance of the first layer. The second layer will be described in further detail below.

Preferably, the first layer and the support layer are formed on a mold substrate in an open-mold process to form the composite structure. However, it is to be appreciated that the first layer and support layer may be formed in a closed mold to form the composite structure. Preferably, a surface of the mold substrate is coated with a known mold release agent to facilitate the eventual removing of the composite structure. The mold release agent may be a composition including silicones, soaps, waxes and/or solvents. For the open-mold process, the first layer is formed over the mold release agent on the surface of the mold substrate. Preferably, the first layer is cured at room temperature of about 25°C (77°F) for a length of time sufficient to prevent bleeding and read through, but not so long as to prevent bonding. Typically, the first layer is cured for about one hour. The urethane acrylate is then applied to the first layer to form the support layer. The urethane acrylate has sufficiently low viscosity to enable spraying of the urethane acrylate during production of the composite structure. It is to be appreciated that the urethane acrylate may be poured or injected, however, spraying is preferred for certain composite articles. In another embodiment, the urethane acrylate is applied to the mold to form the support layer and removed prior to forming the first layer. The first layer is then formed on the support layer outside of the mold in a post production paint operation.

Alternatively, the composite structure may be produced by first forming the first layer in the mold, forming the second layer on the first layer, and forming the support layer on the second layer. The complete composite structure is then removed from the mold. Alternatively, the composite structure may be produced by forming the second layer in the mold, forming the support layer on the second layer, removing the second and support layers from the mold, and then forming the first layer on the second layer outside of the mold to produce the complete composite structure.

Preferably, fiber is included in the support layer to reinforce the composite structure, to eliminate fault propagation, and to provide support for the composite structure. If included, the fiber includes chopped fiberglass, chopped carbon fibers, chopped wood fibers, chopped aramid fibers including all aromatic polyamide materials, chopped polymer fibers such as nylon, and combinations thereof. Preferably, the support layer with the fiber is rolled to eliminate entrained and otherwise trapped air resulting in a layer of densified material. In another embodiment, the support layer without fiber is applied thinly to the first layer. Fiber is then applied onto the support layer. The support layer with the fiber is then rolled. However, it is to be appreciated that the composite structure may be produced without the fiber given that the non-reinforced composite yields the desired physical and functional properties. The completed composite structure is then removed from the open mold substrate. After application of the first layer and the support layer, and also after removing the completed composite structure, the first layer is a show surface of the composite structure whereas the support layer is a backing layer to the first layer.

In one embodiment, the first layer includes a styrenated unsaturated polyester. An example of a typical styrenated unsaturated polyester is Vipel^{™} F737-FB Series Polyester Resin (formerly E737-FBL). Preferably, the styrenated unsaturated polyester of the first layer has a nominal styrene content of from 25 to 50 parts by weight based on the total weight of the polyester. Most preferably, the nominal styrene content of the styrenated unsaturated polyester is 30 to 45 parts by weight based on the total weight of the polyester. The styrenated unsaturated polyester is the product of a condensation reaction between difunctional acids and alcohols, one of which contributes olefinic unsaturation. The polyester is dissolved in styrene or another monomeric material having vinyl unsaturation. Typically, the polyester is formed from a phthalic acid, maleic anhydride, or fumaric acid and propylene glycol. The phthalic acid is most preferably isophthalic acid, and the organic compound is most preferably a difunctional alcohol. Available hydrogen atoms from the isophthalic acid are replaced with an organic group from the alcohol to form the polyester. One styrenated unsaturated polyester suitable for use in the subject invention is commercially available as Vipel^{™} F737-FB Series Polyester Resin (formerly E737-FBL) from AOC Resins of Collierville, Tennessee. In another embodiment, the first layer includes the second urethane acrylate that is the reaction product of a second isocyanate component and a second acrylate component. Preferably, as stated above, the second urethane acrylate is the same as the urethane acrylate of the support layer. However, it is to be appreciated that the second isocyanate component may be different from the isocyanate component of the support layer. Regardless, the second acrylate component may be any acrylate component suitable for including in the support layer.

Depending on the intended use of the composite structure, the second isocyanate component of the subject invention preferably includes an aliphatic isocyanate. For example, for composite structures that are exposed to direct sunlight, UV stability is critical, especially when UV transparent additives, such as TiO₂ pigment, are utilized. Urethane acrylates that are the reaction product of the aliphatic isocyanate and the second acrylate component are more stable to UV light than urethane acrylates that are the reaction product of an aromatic isocyanate. In other words, for the composite structures that are exposed to direct sunlight or other source of UV light, the second isocyanate component may also include aromatic isocyanates so long as at least one UV performance-enhancing additive is included such that the first layer is stable under exposure to UV light. For composite structures where UV stability is not critical, aliphatic isocyanates are not required. Suitable isocyanates for the second isocyanate component, both aromatic and aliphatic, are described below in significant detail in terms of the support layer. Whenever the term aliphatic is used throughout the subject application, it is intended to indicate any combination of aliphatic, acyclic, and cyclic arrangements. That is, aliphatic indicates both straight chains and branched arrangements of carbon atoms (non-cyclic) as well as arrangements of carbon atoms in closed ring structures (cyclic) so long as these arrangements are not aromatic.

Suitable aliphatic isocyanates for the second isocyanate component and for the isocyanate component of the support layer include hexamethylene diisocyanate (HDI), isophorone diisocyanate (IPDI), dicyclohexane - 4,4' diisocyanate (Desmodur W), hexamethylene diisocyanate trimer (HDI Trimer), isophorone diisocyanate trimer (IPDI Trimer), hexamethylene diisocyanate biuret (HDI Biuret), cyclohexane diisocyanate, meta-tetramethylxylene diisocyanate (TMXDI), and mixtures thereof. Additionally, it is to be understood that the second isocyanate component may be a pre-polymer. That is, the second isocyanate component may include any of the aforementioned isocyanates in a stoichiometric excess with the second acrylate component. Further, the acrylate component of these prepolymers could contain multiple isocyanate reactive groups or a single isocyanate reactive group and multiple reactive acrylate or olefinic functionalities. The second isocyanate component may also include an aromatic isocyanate. In such cases, as discussed above, it may be necessary to supplement the first layer with at least one UV performance-enhancing additive such that the first layer is stable under exposure to UV light.

Preferably, the first layer is formed from a paint for enhancing the appearance of the composite structure. It is to be understood that the paint may include any pigment known in the art, such as the TiO₂ as set forth above, or any other paint as known in the art for including in the first layer that is the show surface. Other examples of paint suitable for the subject invention include paint selected from the group of latex-based water-borne, latex-based solvent-borne, acrylic-based water-born, and acrylic-based solvent-borne paints.

As stated above, the support layer includes the urethane acrylate, which is the reaction product of the isocyanate component and the acrylate component. More specifically, the isocyanate component has at least two isocyanate groups, which provide polymeric functionality to the urethane acrylate. In a preferred embodiment, the isocyanate component has from two to three isocyanate groups.

Preferably, the isocyanate component is selected from the group of toluene diisocyanates, polymeric diphenylmethane diisocyanates, diphenylmethane diisocyanates, and combinations thereof. In a most preferred embodiment, the isocyanate component is a polymeric diphenylmethane diisocyanate. Specific examples of preferred isocyanate components suitable for the urethane acrylate of the support layer include, but are not limited to, Lupranate^{®} M20S, Lupranate^{®} MI, Lupranate^{®} M70R, Lupranate^{®} M200, and ELASTOFLEX^{®} R23000. All are commercially available from BASF Corporation. As alluded to above, the isocyanate component may comprise a combination of isocyanates. That is, a blend of at least two isocyanates may be utilized for reaction with the acrylate component to form the urethane acrylate of the support layer.

Other suitable isocyanate components include, but are not limited to, conventional aliphatic, cycloaliphatic, araliphatic and aromatic isocyanates. Specific examples include: alkylene diisocyanates with 4 to 12 carbons in the alkylene radical such as 1,12-dodecane diisocyanate, 2-ethyl-1,4-tetramethylene diisocyanate, 2-methyl-1,5-pentamethylene diisocyanate, 1,4-tetramethylene diisocyanate, 1,6-hexamethylene diisocyanate; cycloaliphatic diisocyanates such as 1,3- and 1,4-cyclohexane diisocyanate as well as any mixtures of these isomers, 1-isocyanato-3,3,5-trimethyl-5-isocyanatomethylcyclohexane (isophorone diisocyanate), 2,4- and 2,6-hexahydrotoluene diisocyanate as well as the corresponding isomeric mixtures, 4,4'-2,2'-, and 2,4'-dicyclohexylmethane diisocyanate as well as the corresponding isomeric mixtures, aromatic diisocyanates such as 2,4- and 2,6-toluene diisocyanate and the corresponding isomeric mixtures, 4,4'-, 2,4'-, and 2,2'-diphenylmethane diisocyanate and the corresponding isomeric mixtures, as well as mixtures of any of the aforementioned isocyanate components.

The acrylate component as set forth above for including in the urethane acrylate and in the second urethane acrylate has at least one functional group that is reactive with at least one of the isocyanate groups of the isocyanate components. Preferably, the acrylate component has from one to four functional groups. In a most preferred embodiment, the acrylate component has one functional group for providing sufficiently low viscosity, to be discussed in further detail below, to enable processing of the urethane acrylate during the production of the composite structure.

Preferably, the functional groups are selected from the group of hydroxy-functional groups, amine-functional groups, and combinations thereof. Suitable hydroxy-functional groups include hydroxy-functional alkyl groups having from one to twenty carbon atoms. Specific examples of acrylate components including suitable hydroxy-functional groups include hydroxymethyl, hydroxyethyl, hydroxypropyl, and hydroxybutyl acrylates and alkacrylates, and combinations thereof. It is to be appreciated that the acrylates may include more than one of the aforementioned hydroxy-functional groups and may be incorporated as a prepolymer as described above.

Preferably, the acrylate component includes at least one alkyl group having from one to twenty carbon atoms. Specific examples of acrylate components including suitable alkyl groups include methacrylates, ethacrylates, propacrylates, butacrylates, phenylacrylates, methacrylamides, ethacrylamides, butacrylamides, and combinations thereof. Preferred acrylate components include hydroxymethyl methacrylate, hydroxyethyl methacrylate, hydroxypropyl methacrylate, hydroxymethyl ethacrylate, hydroxyethyl ethacrylate, hydroxypropyl ethacrylate, glycerol dimethacrylate, N-methylol methacrylamide, 2-tert-butyl aminoethyl methacrylate, dimethylaminopropyl methacrylamide, and combinations thereof. In a most preferred embodiment, the acrylate component is a hydroxyethyl methacrylate.

Many urethane acrylates, more specifically mixtures of the isocyanate component and the acrylate component prior to reaction, have a high viscosity, making it difficult to spray. The viscosity of the mixtures may be adjusted by varying the acrylate components according to the number of functional groups per acrylate component and by varying the amount of the acrylate component with respect to the isocyanate component. The acrylate component is provided in a stoichiometric excess with respect to the isocyanate component. The excess acrylate component functions as a reactive diluent for lowering the viscosity of the urethane acrylate. Preferably, the stoichiometric excess of the acrylate component is defined as a range of molar equivalent ratios of the acrylate component to the isocyanate component from 3:1 to 1.05:1. More preferably, the stoichiometric excess is defined as a range of molar equivalent ratios of from 2.5:1 to 1.05:1. In a most preferred embodiment, the stoichiometric excess is defined as a range of molar equivalent ratios of from 2:1 to 1.05:1. The actual amounts by weight of the acrylate component and the isocyanate component will vary depending on the specific acrylate or mixture of acrylates used, as well as with the specific isocyanate and/or isocyanate mixture used.

Alternatively, a reactive diluent other than the acrylate component is included in the mixture primarily to further lower the viscosity of the mixture. The reactive diluent has at least one acrylate-reactive functional group selected from the group of vinyl, allyl, cyclic allyl, cyclic vinyl, acrylic, functionalized acrylic, acrylamides, acrylonitrile, and combinations thereof for reacting with acrylate groups of the acrylate component that remain unreacted after the isocyanate component reacts with the acrylate component. Specific examples of reactive diluents that are suitable for the subject invention include, but not limited to styrene, divinyl benzene, allyl alkylacrylates, vinyl toluene, dicetone acrylamide, acrylonitrile, methyl methacrylate, hydroxyethyl methacrylate, hydroxypropyl methacrylate, alpha methyl styrene, butyl styrene, monochlorostyrene and combinations thereof. Preferably, the weight ratio of the reactive diluent to the urethane acrylate is at least 0.01:1. More preferably, the weight ratio of the reactive diluent to the acrylate component is from 0.1:1 to 1:1. In terms of actual amounts by weight, the reactive diluent is preferably present in an amount of at least 1.0 parts by weight, more preferably from 1.0 to 40 parts by weight, most preferably from 5 to 25 parts by weight based on the total weight of the urethane acrylate component.

The viscosity of the mixture of the urethane acrylate prior to reaction and the reactive diluent must be sufficiently low to enable spray application during the production of the composite structure. The viscosity of the mixture is from 50 to 600 centipoise at 25 °C (77°F). More preferably, the viscosity of the mixture is from 100 to 300 centipoise, most preferably from 150 to 250 centipoise at 25°C (77°F). Lower viscosities within the above-stated ranges are required as the amount of filler present in the support layer is increased. Resulting viscosities of the support layer including the filler may be up to 10,000 centipoise at 25°C (77°F) with a thixotropic index of from 2.4 to 10.
Preferably, the support layer further includes a catalyst. In one embodiment, the catalyst is a temperature-activated catalyst which is activated with heat after the composite article is formed, a specific example of which is cumene peroxide. Alternatively, the catalyst may be selected from the group of photo-initiated, peroxide-based, amine-based, and metal-based catalysts. Specific examples of such catalysts include hydrogen peroxide, dibenzoyl peroxide, acetyl peroxide, benzoyl hydroperoxide, t-butyl hydroperoxide, di-t-butyl peroxide, lauroyl peroxide, butyryl peroxide, diisopropylbenzene hydroperoxide, cumene hydroperoxide, paramenthane hydroperoxide, diacetyl peroxide, di-alpha-cumyl peroxide, dipropyl peroxide, diisopropyl peroxide, isopropyl-t-butyl peroxide, butyl-t-butyl peroxide, difuroyl peroxide, bis (triphenylmethyl) peroxide, bis(p-methoxybenzoyl)peroxide, p-monomethoxybenzoyl peroxide, rubene peroxide, propyl hydroperoxide, isopropyl hydroperoxide, n-butyl hydroperoxide, t-butyl hydroperoxide, cyclohexyl hydroperoxide, trans-decalin hydroperoxide, alpha-methylbenzyl hydroperoxide, alpha-methyl-alpha-ethyl benzyl hydroperoxide, tetralin hydroperoxide, triphenylmethyl hydroperoxide, diphenylmethyl hydroperoxide, benzoyl peroxide, organic tin compounds such as tin (II) salts of organic carboxylic acids, e.g., tin (II) acetate, tin (II) octoate, tin (II) ethylhexanate and tin (II) laurate, and the dialkyltin (IV) salts of organic carboxylic acids, e.g., dibutyltin diacetate, dibutyltin dilaurate, dibutyltin maleate, dioctyltin diacetate, cobalt octoate, cobalt napthanate, and combinations thereof. Additional catalysts include dimethyl-para-toluidine (DMPT), dimethylaniline (DMA), diethylaniline (DEA), and combinations thereof.

Preferably, the total amount of catalyst present in the resin component is from 0.02 to 7 parts by weight, based on the total weight of the resin component to ensure sufficient cure and cross-linking in the reaction of the urethane acrylate. More preferably, the total amount of catalyst present is from 0.5 to 5 parts by weight, based on the total weight of the resin component.

The second layer may further comprise an additive or additives. If included, the additive is selected from the group of surfactants, plasticizers, polymerization inhibitors, antioxidants, compatibilizing agents, supplemental cross-linking agents, flame retardants, anti-foam agents, UV performance enhancers, hindered amine light stabilizers, pigments, thixotropic agents, reactive fillers, non-reactive fillers, and combinations thereof. Other suitable additives include, but are not limited to, cell regulators, hydrolysis-protection agents, fungistatic and bacteriostatic substances, dispersing agents, adhesion promoters, and appearance enhancing agents. Each of these additives serves a specific function, or functions, within the urethane acrylate that are known to those skilled in the art.

When present, the second layer preferably includes the second urethane acrylate as described above for including in the first layer. UV stability remains an issue, and for the urethane acrylates that are the reaction product of an aromatic isocyanate, the first layer preferably includes the paint, as set forth above, for protecting the second layer from UV light. Preferably, the first layer further includes a UV performance-enhancing additive for further protecting the second layer from UV light.

The following examples, illustrating the composition of the first layer and the second layer, are intended to illustrate and not to limit the invention. The amounts set forth in these examples are by weight, unless otherwise indicated.

### EXAMPLES

Composite structures of the subject invention are formed including a support layer formed from a urethane acrylate that is the reaction product of an isocyanate component and an acrylate component. The isocyanate component includes isocyanate groups that are reactive with the isocyanate-reactive functional group pendent to the acrylate component. More specifically, the acrylate component includes a hydroxy-functional alkyl group for reacting with at least one of the isocyanate groups of the isocyanate component. Although not specifically set forth in the table included herein, the composite structure includes a first layer that is a show surface of the composite structure. The first layer may be of any variety as mentioned above. It is also to be appreciated that the composite structure may further include a second layer, also described above. Specific components included in the support layer are set forth in Table 1.

**TABLE 1**

| | **Component** | **Ex. A** | **Ex. B** | **Ex. C** | **Ex. D** | **Ex. E** |
|---|---|---|---|---|---|---|
| **Support Layer** | | | | | | |
| | Acrylate A | 51.91 | 39.38 | 65.14 | 61.49 | 27.38 |
| | Reactive Diluent A | 20.74 | 0.00 | 0.00 | 0.00 | 0.00 |
| | Reactive Diluent B | 0.00 | 0.00 | 0.00 | 0.00 | 7.31 |
| | Catalyst A | 0.25 | 0.50 | 0.49 | 3.73 | 0.05 |
| | Catalyst B | 0.50 | 0.25 | 0.99 | 2.02 | 0.15 |
| | Catalyst C | 0.00 | 0.00 | 0.00 | 0.00 | 0.50 |
| | Catalyst D | 0.00 | 0.00 | 0.00 | 0.00 | 0.00 |
| | Catalyst E | 0.00 | 0.00 | 0.00 | 0.00 | 0.00 |
| | Catalyst F | 0.00 | 0.00 | 0.00 | 0.56 | 0.06 |
| | Catalyst G | 0.00 | 0.00 | 0.00 | 0.05 | 0.02 |
| | Additive A | 0.00 | 39.69 | 0.00 | 0.00 | 0.00 |
| | Additive B | 0.00 | 0.00 | 0.00 | 0.00 | 0.50 |
| | Additive C | 0.00 | 0.00 | 0.00 | 0.00 | 0.20 |
| | Additive E | 0.00 | 0.00 | 0.00 | 0.00 | 49.80 |
| | Additive F | 0.00 | 0.00 | 0.00 | 0.01 | 0.01 |
| | Additive G | 0.00 | 0.00 | 0.00 | 0.52 | 0.00 |
| | Water | 0.00 | 0.00 | 0.00 | 0.00 | 0.00 |
| | Isocyanate A | 26.60 | 20.18 | 33.38 | 31.62 | 14.06 |
| | Isocyanate B | 0.00 | 0.00 | 0.00 | 0.00 | 0.00 |
| | Isocyanate C | 0.00 | 0.00 | 0.00 | 0.00 | 0.00 |
| | NCO% of the Isocyanate | 31.40 | 31.40 | 31.40 | 31.40 | 31.40 |
| | Total | 100.00 | 100.00 | 100.00 | 100.00 | 100.00 |
| | Gel Time, Minutes | 55:00 | 10:00 | 2:00 | 3:15 | 8:20 |

| | **Component** | **Ex. F** | **Ex. G** | **Ex. H** | **Ex. I** | **Ex. J** |
|---|---|---|---|---|---|---|
| **Support Layer** | | | | | | |
| | Acrylate A | 39.69 | 39.81 | 38.00 | 55.18 | 61.82 |
| | Reactive Diluent A | 0.00 | 0.00 | 0.00 | 0.00 | 0.00 |
| | Reactive Diluent B | 0.00 | 0.00 | 24.88 | 14.75 | 9.81 |
| | Catalyst A | 0.15 | 0.15 | 0.00 | 0.00 | 0.09 |
| | Catalyst B | 0.60 | 0.30 | 0.15 | 0.15 | 0.27 |
| | Catalyst C | 0.00 | 0.00 | 1.00 | 1.00 | 1.02 |
| | Catalyst D | 0.00 | 0.00 | 0.15 | 0.00 | 0.00 |
| | Catalyst E | 0.00 | 0.00 | 0.00 | 0.15 | 0.00 |
| | Catalyst F | 0.00 | 0.00 | 0.13 | 0.13 | 0.12 |
| | Catalyst G | 0.00 | 0.00 | 0.05 | 0.04 | 0.04 |
| | Additive A | 39.72 | 39.84 | 0.00 | 0.00 | 0.00 |
| | Additive B | 0.00 | 0.00 | 0.00 | 0.00 | 0.00 |
| | Additive C | 0.00 | 0.00 | 0.20 | 0.20 | 0.37 |
| | Additive D | 0.00 | 0.00 | 0.00 | 0.00 | 0.00 |
| | Additive E | 0.00 | 0.00 | 0.00 | 0.00 | 0.00 |
| | Additive F | 0.00 | 0.00 | 0.03 | 0.03 | 0.03 |
| | Water | 0.00 | 0.00 | 0.00 | 0.00 | 0.00 |
| | Isocyanate A | 19.85 | 19.90 | 35.41 | 28.37 | 8.81 |
| | Isocyanate B | 0.00 | 0.00 | 0.00 | 0.00 | 8.81 |
| | Isocyanate C | 0.00 | 0.00 | 0.00 | 0.00 | 8.81 |
| | NCO % of the Isocyanate | 31.40 | 31.40 | 31.40 | 31.40 | 37.74 |
| | Total | 100.00 | 100.00 | 100.00 | 100.00 | 100.00 |
| | Gel Time, Minutes | 3:15 | 5:00 | 31:40 | 51:00 | 3:50 |

Acrylate A is a 98% hydroxyethyl methacrylate (HEMA) solution, commercially available from Degussa.

Catalyst A is N,N-dimethyl-para-toluidine (DMPT), commercially available from RSA.

Catalyst B is a 12% cobalt solution, commercially available from OMG Americas, Inc.

Catalyst C is a 40% benzoyl peroxide solution.

Catalyst D is dimethylaniline (DMA).

Catalyst E is diethylaniline (DEA).

Catalyst F is potassium octoate commercially available from Air Products and Chemicals, **I**nc**.**

Catalyst G is dibutyltin dilaurate commercially available from Air Products and Chemicals, Inc.

Additive A is chopped glass.

Additive B is a polysiloxane anti-foam agent in diisobutylketone solvent commercially available from Byk Chemie.

Additive C is 2,2,4-trimethyl-1,3-pentanediol diisobutyrate plasticizer commercially available from Eastman-Kodak.

Additive D is calcium carbonate.

Additive E is 4-methyoxyphenol (MeHQ) polymerization inhibitor.

Additive F is butylated hydroxytoluene (BHT).

Isocyanate A is a polymeric diphenylmethane diisocyanate (PMDI) with a functionality of approximately 2.7 and a NCO content of approximately 31.4 parts by weight, commercially available from BASF Corp.

Isocyanate B is a toluene diisocyanate (TDI) with a functionality of approximately 2.0 and a NCO content of approximately 48.2 parts by weight based on the total weight, commercially available from BASF Corp.

Isocyanate C is pure diphenylmethane diisocyanate (MDI) with a functionality of approximately 2.0 and a NCO content of approximately 33.5 parts by weight, commercially available from BASF Corp.

## Claims

1. A composite structure comprising:
(A) a first layer that is a show surface of said composite structure; and
(B) a support layer comprising a urethane acrylate that is the reaction product of:
(I) an isocyanate component having at least two isocyanate groups; and
(II) a stoichiometric excess of an acrylate component having at least one functional group that is reactive with at least one of said isocyanate groups.

2. A composite structure as set forth in claim 1 wherein said functional group is selected from the group of hydroxy-functional groups, amine-functional groups, and combinations thereof.

3. A composite structure as set forth in claim 2 wherein said acrylate component has from one to four functional groups.

4. A composite structure as set forth in claim 1 wherein said functional group comprises a hydroxy-functional group.

5. A composite structure as set forth in claim 4 wherein said hydroxy-functional group has an alkyl group having from one to twenty carbon atoms.

6. A composite structure as set forth in claim 4 wherein said acrylate component has at least one alkyl group having from one to twenty carbon atoms.

7. A composite structure as set forth in claim 1 wherein said stoichiometric excess of said acrylate component is further defined as a range of molar equivalent ratios of said acrylate component to said isocyanate component of from 3:1 to 1.05:1.

8. A composite structure as set forth in claim 7 wherein said range of molar equivalent ratios of said acrylate component to said isocyanate component is from 2.5:1 to 1.05:1.

9. A composite structure as set forth in claim 1 wherein said isocyanate component has an average of from two to three isocyanate groups.

10. A composite structure as set forth in claim 9 wherein said isocyanate component is selected from the group of toluene diisocyanates, polymeric diphenylmethane diisocyanates, diphenylmethane diisocyanates, and combinations thereof.

11. A composite structure as set forth in claim 1 wherein said support layer further comprises a reactive diluent having at least one acrylate reactive functional group selected from the group of vinyl groups, allyl groups, cyclic allyl groups, cyclic vinyl groups, acrylic groups, functionalized acrylate groups, acrylamide groups, acrylonitrile groups, and combinations thereof.

12. A composite structure as set forth in claim 11 wherein said reactive diluent is selected from the group of styrene, divinyl benzene, allyl alkylacrylates, vinyl toluene, dicetone acrylamide, acrylonitrile, hydroxyethyl methacrylate, hydroxypropyl methacrylate, alpha methyl styrene, butyl styrene, monochlorostyrene and combinations thereof.

13. A composite structure as set forth in claim 11 wherein said reactive diluent and said urethane acrylate are present in a weight ratio of at least 0.01:1.

14. A composite structure as set forth in claim 1 wherein said support layer further comprises a fiber.

15. A composite structure as set forth in claim 14 wherein said fiber is selected from the group of chopped fiberglass, chopped carbon fibers, chopped wood fibers, chopped aramid fibers including all aromatic polyamide materials, chopped polymer fibers such as nylon, and combinations thereof.

16. A composite structure as set forth in claim 1 wherein said support layer further comprises at least one additive selected from the group of surfactants, plasticizers, polymerization inhibitors, antioxidants, compatibilizing agents, supplemental cross-linking agents, flame retardants, anti-foam agents, UV performance enhancers, hindered amine light stabilizers, pigments, thixotropic agents, reactive fillers, non-reactive fillers, and combinations thereof.

17. A composite structure as set forth in claim 1 wherein said support layer has a thickness of at least 0.125 inches (3,18mm).

18. A composite structure as set forth in claim 1 wherein said first layer comprises a styrenated unsaturated polyester.

19. A composite structure as set forth in claim 1 further including a second layer disposed between said first layer and said support layer.

20. A composite structure as set forth in claim 19 wherein said second layer comprises a second urethane acrylate.

21. A composite structure as set forth in claim 20 wherein said first layer comprises a paint and said paint is applied to said second layer.

22. A composite structure as set forth in claim 21 wherein said paint is selected from the group of latex-based water-borne, latex-based solvent-borne, acrylic-based water-born, and acrylic-based solvent-borne paints.

23. A composite structure as set forth in claim 21 wherein said paint further comprises a UV inhibitor.

24. A composite structure as set forth in claim 20 wherein said second urethane acrylate is the same as said urethane acrylate of said support layer.

25. A composite structure as set forth in claim 1 wherein said first layer comprises a second urethane acrylate.

26. A composite structure as set forth in claim 25 wherein said second urethane acrylate is the reaction product of an aliphatic isocyanate component and said acrylate component.

## Patentansprüche

1. Verbundstruktur, umfassend:
(A) eine erste Schicht, welche eine Darstellungsoberfläche der Verbundstruktur ist; und
(B) eine Trägerschicht umfassend ein Urethanacrylat, das das Reaktionsprodukt ist von:
(I) einer Isocyanatkomponente mit mindestens zwei Isocyanatgruppen; und
(II) einem stöchiometrischen Überschuss einer Acrylatkomponente mit mindestens einer funktionellen Gruppe, die mit mindestens einer der Isocyanatgruppen reaktionsfähig ist.

2. Verbundstruktur gemäß Anspruch 1, wobei die funktionelle Gruppe aus der Gruppe von hydroxyfunktionellen Gruppen, aminfunktionellen Gruppen und Kombinationen davon gewählt ist.

3. Verbundstruktur gemäß Anspruch 2, wobei die Acrylatkomponente ein bis vier funktionelle Gruppen aufweist.

4. Verbundstruktur gemäß Anspruch 1, wobei die funktionelle Gruppe eine hydroxyfunktionelle Gruppe umfasst.

5. Verbundstruktur gemäß Anspruch 4, wobei die hydroxyfunktionelle Gruppe eine Alkylgruppe mit ein bis zwanzig Kohlenstoffatomen aufweist.

6. Verbundstruktur gemäß Anspruch 4, wobei die Acrylatkomponente mindestens eine Alkylgruppe mit ein bis zwanzig Kohlenstoffatomen aufweist.

7. Verbundstruktur gemäß Anspruch 1, wobei der stöchiometrische Überschuss der Acrylatkomponente weiter als ein Bereich von molaren Äquivalentverhältnissen der Acrylatkomponente zu der Isocyanatkomponente von 3:1 bis 1,05:1 definiert ist.

8. Verbundstruktur gemäß Anspruch 7, wobei der Bereich der molaren Äquivalentverhältnisse der Acrylatkomponente zu der Isocyanatkomponente 2,5:1 bis 1,05:1 ist.

9. Verbundstruktur gemäß Anspruch 1, wobei die Isocyanatkomponente durchschnittlich zwei bis drei Isocyanatgruppen aufweist.

10. Verbundstruktur gemäß Anspruch 9, wobei die Isocyanatkomponente aus der Gruppe von Toluoldiisocyanaten, polymeren Diphenylmethandiisocyanaten, Diphenylmethandiisocyanaten und Kombinationen davon gewählt ist.

11. Verbundstruktur gemäß Anspruch 1, wobei die Trägerschicht weiterhin ein reaktives Verdünnungsmittel mit mindestens einer Acrylatreaktiven funktionellen Gruppe, gewählt aus der Gruppe von Vinylgruppen, Allylgruppen, cyclischen Allylgruppen, cyclischen Vinylgruppen, Acrylgruppen, funktionalisierten Acrylatgruppen, Acrylamidgruppen, Acrylnitrilgruppen und Kombinationen davon, umfasst.

12. Verbundstruktur gemäß Anspruch 11, wobei das reaktive Verdünnungsmittel aus der Gruppe von Styrol, Divinylbenzol, Allylalkylacrylaten, Vinyltoluol, Dicetonacrylamid, Acrylnitril, Hydroxyethylmethacrylat, Hydroxypropylmethacrylat, alpha-Methylstyrol, Butylstyrol, Monochlorstyrol und Kombinationen davon gewählt ist.

13. Verbundstruktur gemäß Anspruch 11, wobei das reaktive Verdünnungsmittel und das Urethanacrylat in einem Gewichtsverhältnis von mindestens 0,01:1 vorliegen.

14. Verbundstruktur gemäß Anspruch 1, wobei die Trägerschicht weiter eine Faser umfasst.

15. Verbundstruktur gemäß Anspruch 14, wobei die Faser aus der Gruppe von zerkleinerter bzw. zerhackter Glasfaser, zerkleinerten Kohlenstofffasern, zerkleinerten Holzfasern, zerkleinerten Aramidfasern, einschließlich aller aromatischer Polyamidmaterialien, zerkleinerten Polymerfasern, wie Nylon, und Kombinationen davon gewählt ist.

16. Verbundstruktur gemäß Anspruch 1, wobei die Trägerschicht weiter mindestens ein Additiv, gewählt aus der Gruppe von Tensiden, Weichmachern, Polymerisationsinhibitoren, Antioxidanzien, Kompatibilisierungsmitteln, ergänzenden Quervernetzungsmitteln, Flammschutzmitteln, Antischaummitteln, die UV-Leistung verbessernden Mitteln, Gehinderten-Amin-Lichtstabilisatoren, Pigmenten, thixotropen Mitteln, reaktiven Füllstoffen, nicht-reaktiven Füllstoffen und Kombinationen davon, umfasst.

17. Verbundstruktur gemäß Anspruch 1, wobei die Trägerschicht eine Dicke von mindestens 0,125 Inch (3,18 mm) aufweist.

18. Verbundstruktur gemäß Anspruch 1, wobei die erste Schicht einen styrolisierten ungesättigten Polyester umfasst.

19. Verbundstruktur gemäß Anspruch 1, weiterhin einschließend eine zweite, zwischen der ersten Schicht und der Trägerschicht vorgesehene Schicht.

20. Verbundstruktur gemäß Anspruch 19, wobei die zweite Schicht ein zweites Urethanacrylat umfasst.

21. Verbundstruktur gemäß Anspruch 20, wobei die erste Schicht einen Lack umfasst und der Lack auf die zweite Schicht aufgetragen ist.

22. Verbundstruktur gemäß Anspruch 21, wobei der Lack aus der Gruppe von wassergetragenen Lacken auf Latexbasis, lösungsmittelgetragenen Lacken auf Latexbasis, wassergetragenen Lacken auf Acrylbasis und lösungsmittelgetragenen Lacken auf Acrylbasis gewählt ist.

23. Verbundstruktur gemäß Anspruch 21, wobei der Lack weiterhin einen UV-Hemmer umfasst.

24. Verbundstruktur gemäß Anspruch 20, wobei das zweite Urethanacrylat das gleiche ist wie das Urethanacrylat der Trägerschicht.

25. Verbundstruktur gemäß Anspruch 1, wobei die erste Schicht ein zweites Urethanacrylat umfasst.

26. Verbundstruktur gemäß Anspruch 25, wobei das zweite Urethanacrylat das Reaktionsprodukt einer aliphatischen Isocyanatkomponente und der Acrylatkomponente ist.

## Revendications

1. Structure composite comprenant :
(A) une première couche qui présente une surface de présentation de ladite structure composite, et
(B) une couche de support comprenant un acrylate d'uréthanne qui est le produit de réaction de :
(i) un composant isocyanate ayant au moins deux groupes isocyanate, et
(ii) un excédent stoechiométrique d'un composant acrylate ayant au moins un groupe fonctionnel qui réagit avec au moins un desdits groupes isocyanate.

2. Structure composite telle qu'exposée dans la revendication 1, dans laquelle ledit groupe fonctionnel est choisi dans le groupe formé par des groupes à fonctionnalité hydroxy, des groupes à fonctionnalité amine et des combinaisons de ceux-ci.

3. Structure composite telle qu'exposée dans la revendication 2, dans laquelle ledit composant acrylate a de un à quatre groupes fonctionnels.

4. Structure composite telle qu'exposée dans la revendication 1, dans laquelle ledit groupe fonctionnel comprend un groupe à fonctionnalité hydroxy.

5. Structure composite telle qu'exposée dans la revendication 4, dans laquelle ledit groupe à fonctionnalité hydroxy a un groupe alkyle ayant de un à vingt atomes de carbone.

6. Structure composite telle qu'exposée dans la revendication 4, dans laquelle ledit composant acrylate a au moins un groupe alkyle ayant de un à vingt atomes de carbone.

7. Structure composite telle qu'exposée dans la revendication 1, dans laquelle ledit excédent stoechiométrique dudit composant acrylate est en outre défini comme une plage de rapports d'équivalents molaires dudit composant acrylate audit composant isocyanate de 3 _{:} 1 à 1,05 : 1.

8. Structure composite telle qu'exposée dans la revendication 7, dans laquelle ladite plage de rapports d'équivalents molaires dudit composant acrylate audit composant isocyanate est de 2,5 : 1 à 1,05 : 1.

9. Structure composite telle qu'exposée dans la revendication 1, dans laquelle ledit composant isocyanate a une moyenne de deux à trois groupes isocyanate.

10. Structure composite telle qu'exposée dans la revendication 9, dans laquelle ledit composant isocyanate est choisi dans le groupe formé par les diisocyanates de toluène, les diisocyanates de diphénylméthane polymères, les diisocyanates de diphénylméthane et des combinaisons de ceux-ci.

11. Structure composite telle qu'exposée dans la revendication 1, dans laquelle ladite couche de support comprend en outre un diluant réactif ayant au moins un groupe réactif à fonctionnalité acrylate choisi dans le groupe formé par les groupes vinyle, les groupes allyle, les groupes allyle cycliques, les groupes vinyle cycliques, les groupes acryliques, les groupes acrylate fonctionnalisés, les groupes acrylamide, les groupes acrylonitrile et des combinaisons de ceux-ci.

12. Structure composite telle qu'exposée dans la revendication 11, dans laquelle ledit diluant réactif est choisi dans le groupe formé par le styrène, le divinyle benzène, les alkylacrylates d'allyle, le vinyltoluène, l'acrylamide dicétone, l'acrylonitrile, le méthacrylate d'hydroxyéthyle, le méthacrylate d'hydroxypropyle, l'alpha-méthylstyrène, le butylstyrène, le monochlorostyrène et des combinaisons de ceux-ci.

13. Structure composite telle qu'exposée dans la revendication 11, dans laquelle ledit diluant réactif et ledit acrylate d'uréthanne sont présents dans un rapport de poids d'au moins 0,01 : 1.

14. Structure composite telle qu'exposée dans la revendication 1, dans laquelle ladite couche de support comprend en outre une fibre.

15. Structure composite telle qu'exposée dans la revendication 14, dans laquelle ladite fibre est choisie dans le groupe formé par les fibres de verre hachées, les fibres de carbone hachées, les fibres de bois hachées, les fibres d'aramide hachées comprenant tous les matériaux polyamides aromatiques, les fibres de polymère hachées tel que du nylon, et des combinaisons de celles-ci.

16. Structure composite telle qu'exposée dans la revendication 1, dans laquelle ladite couche de support comprend en outre au moins un additif choisi dans le groupe formé par les tensioactifs, les agents plastifiants, les inhibiteurs de polymérisation, les antioxydants, les agents de compatibilisation, les agents de réticulation supplémentaires, les agents ignifugeants, les agents antimoussants, les activateurs de performance UV, les photostabilisants à base d'amine à encombrement stérique, les pigments, les agents thixotropiques, les matières de remplissage réactives, les matières de remplissage non réactives, et des combinaisons de ceux-ci.

17. Structure composite telle qu'exposée dans la revendication 1, dans laquelle ladite couche de support a une épaisseur d'au moins 3,18 mm (0,125 pouce).

18. Structure composite telle qu'exposée dans la revendication 1, dans laquelle ladite première couche comprend un polyester insaturé styréné.

19. Structure composite telle qu'exposée dans la revendication 1 comprenant en outre une deuxième couche disposée entre ladite première couche et ladite couche de support.

20. Structure composite telle qu'exposée dans la revendication 19, dans laquelle ladite deuxième couche comprend un deuxième acrylate d'uréthanne.

21. Structure composite telle qu'exposée dans la revendication 20, dans laquelle ladite première couche comprend une peinture et ladite peinture est appliquée sur ladite deuxième couche.

22. Structure composite telle qu'exposée dans la revendication 21, dans laquelle ladite peinture est choisie dans le groupe formé par les peintures à l'eau à base de latex, les peintures au solvant à base de latex, les peintures à l'eau à base d'acrylique et les peintures au solvant à base d'acrylique.

23. Structure composite telle qu'exposée dans la revendication 21, dans laquelle ladite peinture comprend en outre un inhibiteur UV.

24. Structure composite telle qu'exposée dans la revendication 20, dans laquelle ledit deuxième acrylate d'uréthanne est le même que ledit acrylate d'uréthanne de ladite couche de support.

25. Structure composite telle qu'exposée dans la revendication 1, dans laquelle ladite première couche comprend un deuxième acrylate d'uréthanne.

26. Structure composite telle qu'exposée dans la revendication 25, dans laquelle ledit deuxième acrylate d'uréthanne est le produit de réaction d'un composant isocyanate aliphatique et dudit composant acrylate.
